# EUROPEAN PATENT SPECIFICATION

(11) **EP 1 774 833 B1**
(45) Date of publication and mention of the grant of the patent: **08.10.2008**
(21) Application number: 05759905.2
(22) Date of filing: 11.07.2005
(51) Int. Cl.: H05B 33/08

(54) **LIGHTING SYSTEM AND CONTROLLER**
BELEUCHTUNGSSYSTEM UND STEUERUNG
SYSTEME D'ECLAIRAGE ET REGULATEUR

(30) Priority: 15.07.2004 GB 0415794
(43) Date of publication of application: 18.04.2007
(73) Proprietor: E-Light Limited, Douglas Isle of Man IM1 1ET (GB)
(72) Inventor: SUMMERLAND, David Thomas, Leicestershire LE14 3LU (GB)
(74) Representative: Hutter, Anton
(86) International application number: PCT/GB2005/002745
(87) International publication number: WO 2006/008464

(56) References cited:
- GB-A- 2 184 566
- US-A- 5 430 356
- US-A- 6 118 231
- US-A1- 2001 022 501

## Description

The present invention relates to lighting systems, and in particular to lighting systems in which both relatively high power incandescent lighting units and more recent lower power solid state lighting units are installed.

Incandescent lighting units are used widely for internal lighting in buildings and other accommodation, in particular where dimmable lighting is required. More recently, solid state lighting units, such as those using light emitting diodes (LED's), have become popular for providing so-called 'mood' lighting. By providing three primary colours of light emitting diodes, it is readily possible to control an overall colour of illumination from the LED lighting units by independently varying intensity of output from each one of the primary colour groups.

It is widely recognised however that LED lighting units do not generally replace conventional incandescent and fluorescent lighting units as they are generally more expensive and relatively inefficient at producing high intensity white light. Therefore, LED lighting units are generally installed and used as an adjunct to conventional lighting.

LED lighting units require separate controls and switched mains supplies from standard lighting units so that the standard lighting can be turned off to allow the colour changeable LED lighting to be used. Therefore, duplicate switches to allow full isolation of the individual lighting units, and dual controls for intensity and/or colour, are also required.

GB 2184566, US 2001/022502 and US 5,430,356 each disclose a control unit for light sources having different electrical characteristics.

Installation of separate wiring circuits and switching units for both incandescent lighting and for solid state lighting increases installation costs, especially where LED lighting is being added to an existing installed lighting system. In many domestic environments (e.g. small rooms such as kitchens, bedrooms and bathrooms), it is often considered aesthetically undesirable to provide multiple switch plates on walls for separate lighting controls.

It is an object of the present invention to provide a system that enables control of two such disparate lighting systems using a single control switch plate. It is a further object of the invention to provide a system that enables control of two such disparate lighting systems using a single existing wiring circuit. It is a further object of the invention to provide a system that enables use of a unitary dimmer control switch for separate control of both incandescent and LED lighting.

Some or all of the above objects are provided by embodiments of the present invention as described hereinafter.

According to one aspect, the present invention provides a lighting controller for controlling light intensity output of two different lighting systems, comprising: a control device operable within an overall range of operation between first and second end points, for varying first and second electrical outputs as a function thereof, in which the overall range is divided into (i) a first range over which the first electrical output is varied between a first power level and a second power level, and over which the second electrical output is held substantially constant, and (ii) a second range over which the first electrical output is sufficient to provide power for operation of a solid state lighting system but insufficient to provide power for anything other than a negligible light output of an incandescent lighting system, and over which the second electrical output is varied between a first control level and a second control level.

According to another aspect, the present invention provides a lighting system comprising a first lighting unit and a second lighting unit of different electrical characteristics, and a lighting controller as described above.

In presently preferred embodiments, over the first range of the lighting controller the intensity of the first lighting unit is varied between a first level and a second level and the intensity and/or colour characteristic of the second lighting unit is held substantially constant at a third level; and over the second range of the lighting controller the intensity of the first lighting unit is negligible, and the intensity and/or colour characteristic of the second lighting unit is varied between a fifth level and a sixth level.

In presently preferred embodiments, the lighting system includes a solid state lighting unit comprising: an array of separately controllable light emitters of different colours adapted to provide a variable colour characteristic output of the lighting unit; and a control circuit for receiving a control input and for separately controlling the intensity of output of each of the different colour light emitters in accordance with the control input, wherein the control input is received on the main power supply to the lighting unit.

Embodiments of the present invention will now be described by way of example and with reference to the accompanying drawing in which:

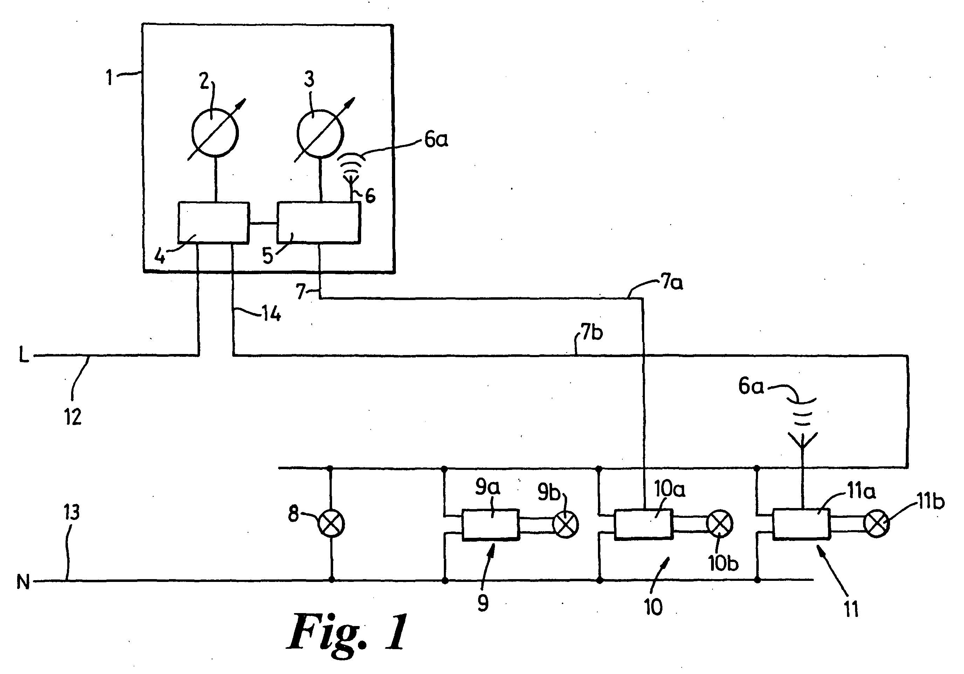

Figure 1 is a schematic diagram of a lighting system according to a preferred arrangement.

With reference to figure 1, a wall switch plate 1 provides two rotary control knobs 2, 3 for providing variable control of respective outputs to be described hereinafter. The first knob 2 acts as a brightness or intensity control via a triac or thyristor dimming circuit 4, thus providing a phase-controlled, variable-power first electrical output on connection 14.

Preferably, the first knob 2 also incorporates an isolation switch (not shown) for isolating the electrical output 14, e.g. a push switch operated by pushing the rotary knob 2 on its axis, or a limit switch actuated by turning the knob to one extremity of its range, in accordance with known dimmer switch operation. When not isolated by the isolation switch, the dimming circuit 4 may also provide operating power to a control circuit 5 that provides a second electrical output 6 or 7 in the form of a first control signal to be described hereinafter.

The second knob 3 acts as a lighting colour control via the control circuit 5 and via the second electrical output 6 or 7, in the form of a second control signal.

The wall switch plate 1 provides for connection of two or more lighting units 8 to 11 to a mains supply L, N. In the schematic of figure 1: lighting unit 8 is a mains voltage incandescent lighting unit; lighting unit 9 is a low voltage halogen lighting unit comprising transformer 9a and at least one low voltage bulb 9b; and lighting units 10 and 11 are colour changeable LED units comprising respective control units 10a, 11a and LED arrays 10b, 11b.

The control circuit 5 of the switch plate 1 communicates with the solid state lighting units 10, 11 from the second electrical output 6 or 7 by way of a wired or wireless link. In the schematic of figure 1, three examples of control link are shown. In a first example, the control link comprises a hard wired connection 7a extending from second electrical output 7 to the lighting unit 10. In new installations, providing such a hard wired link is not usually problematic, and the wire 7a may form part of a local area network.

However, in other installations, it is desirable to use existing installed lighting circuits and an additional wire 7a is not used. In this instance, the control link may comprise a wireless control link 6a extending from the second electrical output 6 to the lighting unit 11. The wireless control link 6a may use any existing wireless communication technology in the electromagnetic or acoustic spectra, such as infra red, radio, and ultrasonic.

In a third configuration, mains-borne signalling may be used. In this arrangement, the control link 7b comprises the existing mains cable using mains signalling techniques, such as frequency modulation, amplitude modulation or phase modulation to transmit digital or analogue control signals to the control units 10a, 11a from the control circuit 5.

It will be understood that only one of the three types of control link exemplified in figure 1 need be used for any given switch plate 1. The control links 6a, 7a or 7b preferably use digital signalling techniques, although analogue signalling may also be used.

Operation of the preferred embodiments will now be described.

The two different lighting types - incandescent lighting units 8, 9 and LED lighting units 10, 11 - have significantly different electrical characteristics. The first type of lighting systems have higher power requirements and are controllable in intensity by reducing the mains power that can be drawn by the lighting unit, conventionally by control of the voltage duty cycle of the mains supply. Preferably, this is done with phase-controlled variation in the voltage using a triac or thyristor dimming circuit.

The second type of (solid state) lighting systems have low power requirements, and the intensity of individual solid state devices, such as LED's, in a colour array is generally controlled by pulse width modulation of a constant low voltage supply. The intensity of different colour LED's within the array may be independently controlled in order to effect a change in the colour characteristic output of the lighting system, or may be jointly controlled to effect a change in intensity only.

As such, it has been recognised that the second type of lighting system (e.g. units 10, 11) can continue to operate on only a very small fraction of the power requirements of the first type of lighting system (e.g. lighting units 8, 9). This means that the lighting units 10, 11 can continue to operate at full intensity even when the power available from the first electrical output 14 is at sufficiently low level that the light output from lighting units 8 and 9 is negligible. By 'negligible', we mean that the light output is sufficiently small to have little or no practical effect on lighting a room in which the lighting unit 8, 9 is installed, such that the LED lighting units' output will dominate any lighting.

Thus, in this regime of operation of the lighting units 8, 9, the LED lighting units 10, 11 can still be intensity controlled (and therefore also colour controlled) by way of conventional pulse width modulation techniques applied to the low voltage output of the controllers 10a, 11a.

In the preferred arrangement, dimmer switch 2 has an overall range of physical operation (e.g. approximately 360 degrees), which overall range of operation is divided into two ranges.

The first range of approximately half the overall range (i.e. approximately 180 degrees) is allocated to varying the voltage duty cycle of the first electrical output 14 between a high level corresponding to full brightness of the incandescent lamps 8, 9 and a low level corresponding to low, negligible or nil level of brightness of the incandescent lamps. In one example, the high level corresponds to a 100 % power level and the low level corresponds to approximately 25 % power level.

The second range, corresponding to the other half of the overall range (also approximately 180 degrees) is allocated to varying the first control signal on the second electrical output 6 or 7 between a first level, e.g. corresponding to full brightness of the LED lighting units and a second level, e.g. corresponding to a low, negligible or nil level of brightness of the LED lighting units. In this second range, the first electrical output is held at a level that is sufficient to maintain operation of the LED lighting units, but insufficient to maintain anything other than a low, negligible or nil light output of the incandescent lighting units. Control of the second electrical output 6 or 7 is effected by control circuit 5, which is preferably microprocessor-based.

Because the LED lighting units require a low voltage and low power supply, sufficient power can be extracted from the first electrical output during its 'on' phases even when the incandescent lighting cannot be supported. The control units 10a, 11a may include any necessary voltage / current converters and charge storage devices to enable (i) sufficient power to be extracted during the limited 'on' phases of the reduced power first electrical output, and (ii) proved the low voltage, pulse width modulation supply required to operate the LED lighting units.

Whilst the dimmer switch 2 is in the first range, the first control signal on the second electrical output is held constant at a level which may correspond to full brightness of the LED lighting units, or may alternatively correspond to low, negligible or nil brightness of the LED lighting units. Because the LED lighting units are driven by local controllers 10a, 11 a, these can be programmed to operate any suitable lighting level profile, e.g. one which has a linear or a non-linear transfer characteristic as a function of the first control signal provided by dimmer switch 2. Thus, while the dimmer switch 2 is operating through its first range, the first control signal may indicate to the local controller 10a, 11a that the LED lights should remain fully on, or fully off. When the dimmer switch is operating in the second range, the first control signal will vary to indicate that the intensity or colour of output of the LED lighting units should vary according to a predetermined transfer characteristic.

In the preferred embodiment, the dimmer switch 2 controls the intensity of the LED lighting system when in the second range, and the second rotary knob 3 is used to control the colour or some other characteristic of the LED lighting system. In the case of a colour control function, preferably one end point of the range of operation of the knob 3 corresponds to white light output, and this changes through colours of the rainbow as the knob is rotated through its range of operation to the other end point.

The second characteristic may be determined by a second control signal provided on the second electrical output 6, 7, i.e. multiplexed with the first control signal. In the case of digital control signals, this multiplexing may be achieved using time-multiplexed first and second control signal data packets or suitable code sequences encoding both first and second control signal levels. In the case of analogue control signals, the first and second control signals may occupy different channels using different modulation frequencies, for example.

A number of modifications may be made to the embodiments described in connection with figure 1.

The rotary knobs 2, 3 of the wall switch plate 1 may be slide controls or any other devices capable of providing continuous or quantised variable control over a range between two end points, e.g. separate 'up' and 'down' buttons providing incremental control between the end points. The control knobs or buttons may be provided on a battery powered remote control unit separate from the wall plate 1 or other housing containing the dimming control circuit 4 and control circuit 5.

Although the on/off switching function is preferably provided by a push switch or limit switch coupled to the rotary knob 2 as previously described, a separate switch may also be provided.

Multiple such control knobs may be provided on a single switch plate 1 for independent control of different lighting units. Further, multiple lighting units of the first and second types may be controlled by the same lighting controller.

The overall range of operation of the control device 2 may be allocated to the first and second ranges in different proportions than 50 % each. Still further, while the first and second ranges are preferably coterminous, it will be understood that there may also be a small part of the overall range between the first and second ranges in which neither the first electrical output nor the second electrical output varies significantly or in which both the first and second electrical outputs vary.

Where independent control of only a single characteristic of the second lighting unit type is required (e.g. colour only, not intensity, or colour and intensity but not independently), only a single dimmer switch 2 is required. In this instance, the first and second ranges of operation are as described, but the second range of operation is dedicated to varying the colour and/or intensity according to a predetermined transfer characteristic. For example, the second range may correspond to change in colour through the colour spectrum, or may include a varying intensity white portion followed by a constant intensity but varying colour portion.

Suitable 'intelligence' is preferably built into a microprocessor control unit in controllers 10a, 11 a that these units can be preprogrammed with an appropriate response characteristic to varying control signal levels. In a still further embodiment, the controllers 10a, 11a may be preprogrammed to determine the colour characteristic output of the lighting unit based on an amount of power available from the main power supply. In other words, the 'control signal' is effectively implied in the duty cycle of the main power supply to the LED lighting system.

In other words, the controller 10a, 11a receives the control signal for separately controlling the intensity of output of each of the different colour light emitters from the main power supply to the lighting unit. While the mains duty cycle remains high (for controlling the incandescent lighting units on the same circuit), the controller makes no changes to the output of the LED lighting units. However, when the mains duty cycle is very short (so that any incandescent lighting units on the circuit have low, negligible or no output), the controller 10a, 11a varies the output characteristic of the LED lighting according to changing mains duty cycle.

Other embodiments are intentionally within the scope of the accompanying claims.

## Claims

1. A lighting controller (1) for controlling light intensity output of two different types of lighting systems (8,9,10,11), comprising:
a control device (2,4,5) operable within an overall range of operation between first and second end points, for varying first and second electrical outputs as a function of the operational point,
**characterised in that** the overall range is divided into (i) a first range over which the first electrical output is varied between a first power level and a second power level, and over which the second electrical output is held substantially constant, and (ii) a second range over which the power level of the first electrical output is sufficient to provide power for operation of a solid state lighting system (10,11) but insufficient to provide power for anything other than a negligible light intensity output of an incandescent lighting system (8,9), and over which the second electrical output is varied between a first control level and a second control level.

2. The lighting controller (1) of claim 1 in which the second electrical output is provided as an analogue or digital control signal variable between two levels.

3. The lighting controller (1) of claim 2 in which the control signal is provided at a wireless output (6) of the lighting controller (1).

4. The lighting controller (1) of claim 2 in which the control signal is superimposed on the first electrical output.

5. The lighting controller (1) of any preceding claim in which the control device (2,4,5) includes a single control knob (2) slidable or rotatable between the first and second end points or a pair of buttons respectively for incrementing and decrementing within the overall range of operation between the first and second end points, the control knob (2) or buttons being remotely located from power control elements of the controller, communicating therewith by wireless link (6a).

6. The lighting controller (1) of any preceding claim further including a second control device (3,5) operable over a range of operation for varying a second control characteristic of the second electrical output.

7. A lighting system comprising a first lighting unit (8,9) and a second lighting unit (10,11) of different electrical characteristics,
**characterised in that** the lighting system includes a lighting controller (1) as claimed in any preceding claim.

8. The lighting system of Claim 7 in which over the first range of the lighting controller (1) the intensity of the first lighting unit (8,9) is varied between a first level and a second level and the intensity and/or colour characteristic of the second lighting unit (10,11) is held substantially constant at a third level, and over the second range of the lighting controller (1) the intensity of the first lighting unit (8,9) is negligible, and the intensity and/or colour characteristic of the second lighting unit (10,11) is varied between a fifth level and a sixth level.

9. The lighting system of claim 8 in which the first level is substantially full intensity and the second level is low intensity or off.

10. The lighting system of claim 8 or claim 9 in which the fourth level is low intensity or off, the fifth level is substantially full intensity and the sixth level is low intensity or off.

11. The lighting system of claim 8 or claim 9 in which the fifth level is substantially white light and the sixth level is coloured light.

12. The lighting system of any one of claims 7 to 11 in which the control device (2,4,5) communicates with the first lighting unit (8,9) using first and second power cables (13,14) and communicates with the second lighting unit (10,11) using said first and second power cables (13,14) and a control channel (6a,7a,7b).

13. The lighting system of claim 12 in which the control channel is a separate wired link (7a).

14. The lighting system of claim 12 in which the control channel comprises mains-borne signalling (7b) on the first and/or second power cables (13,14).

15. The lighting system of claim 12 in which the control channel comprises a wireless link (6a).

16. The lighting system of any one of claims 7 to 15 in which the first lighting unit is an incandescent lighting unit (8,9) and the second lighting unit is a solid state lighting unit (10,11).

17. The lighting system of any one of claims 12 to 16 in which the control device (2,4,5) includes a phase-controlled variable power output for supplying the first and second lighting units (8,9,10,11) and controlling the intensity of the first lighting unit (8,9).

18. The lighting system of claim 17 in which the second lighting unit (10,11) includes a decoder (10a,11a) for determining intensity of the second lighting unit according to a control signal received over the control channel (6a,7a,7b).

19. The lighting system of claim 17 or claim 18 in which the second lighting unit (10,11) includes a decoder (10a,11a) for determining colour characteristic of the second lighting unit (10,11) according to a control signal received over the control channel (6a,7a,7b).

20. The lighting system of any one of claims 7 to 19 in which the control device (2,4,5) includes a single control knob (2) slidable or rotatable between the first and second end points or a pair of buttons respectively for incrementing and decrementing within the overall range of operation between the first and second end points, the control knob (2) or buttons being remotely located from power control elements of the controller, communicating therewith by wireless link.

21. The lighting system of claim 12 further including a second control device (3,5) operable over a range of operation for varying a second output characteristic of the second lighting unit (10,11).

22. The lighting system of claim 21 in which the second characteristic is colour.

23. The lighting system of claim 21 in which the second output characteristic is varied by providing a second control signal, by the control device (2,4,5), to the second lighting unit (8,9) over the control channel (6a,7a,7b).

## Patentansprüche

1. Beleuchtungssteuerung (1) zum Steuern der Lichtstärke-Ausgangsleistung von zwei unterschiedlichen Arten von Beleuchtungssystemen (8, 9, 10, 11), umfassend:
eine Steuervorrichtung (2, 4, 5), die in einem Gesamtbetriebsbereich zwischen ersten und zweiten Endpunkten betriebsfähig ist, zum Variieren von ersten und zweiten elektrischen Ausgangsleistungen in Abhängigkeit vom Betriebspunkt,
**dadurch gekennzeichnet, dass** der Gesamtbereich unterteilt ist in: (i) einen ersten Bereich, über den die erste elektrische Ausgangsleistung zwischen einem ersten Leistungspegel und einem zweiten Leistungspegel variiert wird und über den die zweite elektrische Ausgangsleistung im Wesentlichen konstant gehalten wird, und (ii) einen zweiten Bereich, über den der Leistungspegel der ersten elektrischen Ausgangsleistung ausreichend ist, um Leistung für den Betrieb eines Festkörperbeleuchtungssystems (10,11) bereitzustellen, jedoch unzureichend ist, um Leistung für etwas Anderes als eine vernachlässigbare Lichtstärke-Ausgangsleistung eines Glühbeleuchtungssystems (8, 9) bereitzustellen, und über den die zweite elektrische Ausgangsleistung zwischen einem ersten Steuerpegel und einem zweiten Steuerpegel variiert wird.

2. Beleuchtungssteuerung (1) nach Anspruch 1, bei der die zweite elektrische Ausgangsleistung als analoges oder digitales Steuersignal bereitgestellt wird, das zwischen zwei Pegeln variierbar ist.

3. Beleuchtungssteuerung (1) nach Anspruch 2, bei der das Steuersignal an einem drahtlosen Ausgang (6) der Beleuchtungssteuerung (1) bereitgestellt wird.

4. Beleuchtungssteuerung (1) nach Anspruch 2, bei der das Steuersignal der ersten elektrischen Ausgangsleistung überlagert ist.

5. Beleuchtungssteuerung (1) nach einem vorangehenden Anspruch, bei der die Steuervorrichtung (2, 4, 5) einschließt: einen einzigen Steuerknopf (2), der zwischen den ersten und zweiten Endpunkten verschiebbar oder drehbar ist, bzw. ein Paar Druckknöpfe zum Erhöhen und Verringern im Gesamtbetriebsbereich zwischen den ersten und zweiten Endpunkten, wobei sich der Steuerknopf (2) oder die Druckknöpfe entfernt von Leistungssteuerelementen der Steuerung befindet/befinden und mit diesen über eine drahtlose Verbindung (6a) kommunizieren.

6. Beleuchtungssteuerung (1) nach einem vorangehenden Anspruch, die ferner eine über einen Betriebsbereich betriebsfähige zweite Steuervorrichtung (3, 5) zum Variieren eines zweiten Steuermerkmals der zweiten elektrischen Ausgangsleistung einschließt.

7. Beleuchtungssystem, das eine erste Beleuchtungseinheit (8, 9) und eine - zweite Beleuchtungseinheit (10, 11) mit unterschiedlichen elektrischen Eigenschaften umfasst,
**dadurch gekennzeichnet, dass** das Beleuchtungssystem eine Beleuchtungssteuerung (1), wie in einem vorangehenden Anspruch beansprucht, einschließt.

8. Beleuchtungssystem nach Anspruch 7, bei dem über den ersten Bereich der Beleuchtungssteuerung (1) die Stärke der ersten Beleuchtungseinheit (8, 9) - zwischen einem ersten Pegel und einem zweiten Pegel variiert wird, und die Stärke und/oder das Farbmerkmal der zweiten Beleuchtungseinheit (10, 11) im Wesentlichen bei einem dritten Pegel konstant gehalten wird, und über den zweiten - Bereich der Beleuchtungssteuerung (1) die Stärke der ersten Beleuchtungseinheit (8, 9) vernachlässigbar ist und die Stärke und/oder das Farbmerkmal der zweiten - Beleuchtungseinheit (10, 11) zwischen einem fünften Pegel und einem sechsten Pegel variiert wird.

9. Beleuchtungssystem nach Anspruch 8, bei dem der erste Pegel im Wesentlichen die volle Stärke und der zweite Pegel eine geringe Stärke oder der Aus-Zustand ist.

10. Beleuchtungssystem nach Anspruch 8 oder Anspruch 9, bei dem der vierte Pegel eine geringe Stärke oder der Aus-Zustand ist, der fünfte Pegel im Wesentlichen die volle Stärke ist und der sechste Pegel eine geringe Stärke oder der Aus-Zustand ist.

11. Beleuchtungssystem nach Anspruch 8 oder Anspruch 9, bei dem der fünfte Pegel im Wesentlichen weißes Licht ist und der sechste Pegel farbiges Licht ist.

12. Beleuchtungssystem nach einem der Ansprüche 7 bis 11, bei dem die Steuervorrichtung (2, 4, 5) mit der ersten Beleuchtungseinheit (8, 9) unter Nutzung erster und zweiter Leistungskabel (13, 14) kommuniziert und mit der zweiten Beleuchtungseinheit (10, 11) unter Nutzung der ersten und zweiten Leistungskabel (13, 14) und eines Steuerkanals (6a, 7a, 7b) kommuniziert.

13. Beleuchtungssystem nach Anspruch 12, bei dem der Steuerkanal eine separate verdrahtete Verbindung (7a) ist.

14. Beleuchtungssystem nach Anspruch 12, bei dem der Steuerkanal eine an das Stromversorgungsnetz gebundene Signalisierung (7b) auf den ersten und/oder zweiten Leistungskabeln (13, 14) umfasst.

15. Beleuchtungssystem nach Anspruch 12, bei dem der Steuerkanal eine drahtlose Verbindung (6a) umfasst.

16. Beleuchtungssystem nach einem der Ansprüche 7 bis 15, bei dem die erste Beleuchtungseinheit eine Glühbeleuchtungseinheit (8, 9) ist und die zweite Beleuchtungseinheit eine Festkörperbeleuchtungseinheit (10, 11) ist.

17. Beleuchtungssystem nach einem der Ansprüche 12 bis 16, bei dem die Steuervorrichtung (2, 4, 5) eine phasengesteuerte variable Leistungsabgabe zum Versorgen der ersten und zweiten Beleuchtungseinheiten (8, 9, 10, 11) und zum Steuern der Stärke der ersten Beleuchtungseinheit (8, 9) einschließt.

18. Beleuchtungssystem nach Anspruch 17, bei dem die zweite Beleuchtungseinheit (10, 11) einen Decoder (10a, 11a) zum Bestimmen der Stärke der zweiten Beleuchtungseinheit gemäß einem über den Steuerkanal (6a, 7a, 7b) empfangenen Steuersignal einschließt.

19. Beleuchtungssystem nach Anspruch 17 oder Anspruch 18, bei dem die zweite Beleuchtungseinheit (10, 11) einen Decoder (10a, 11a) zum Bestimmen des Farbmerkmals der zweiten Beleuchtungseinheit (10, 11) gemäß einem über den Steuerkanal (6a, 7a, 7b) empfangenen Steuersignal einschließt.

20. Beleuchtungssystem nach einem der Ansprüche 7 bis 19, bei dem die Steuervorrichtung (2, 4, 5) einschließt: einen einzigen Steuerknopf (2), der zwischen den ersten und zweiten Endpunkten verschiebbar oder drehbar ist, bzw. ein Paar Druckknöpfe zum Erhöhen und Verringern im Gesamtbetriebsbereich zwischen den ersten und zweiten Endpunkten, wobei sich der Steuerknopf (2) oder die Druckknöpfe entfernt von Leistungssteuerelementen der Steuerung befinden und mit diesen über eine drahtlose Verbindung kommunizieren.

21. Beleuchtungssystem nach Anspruch 12, das ferner eine über einen Betriebsbereich betriebsfähige zweite Steuervorrichtung (3, 5) zum Variieren eines zweiten Ausgangsleistungsmerkmals der zweiten Beleuchtungseinheit (10, 11) einschließt.

22. Beleuchtungssystem nach Anspruch 21, bei dem das zweite Merkmal die - Farbe ist.

23. Beleuchtungssystem nach Anspruch 21, bei dem das zweite Ausgangsleistungsmerkmal durch Bereitstellen eines zweiten Steuersignals durch die Steuervorrichtung (2, 4, 5) an die zweite Beleuchtungseinheit (8, 9) über den Steuerkanal (6a, 7a, 7b) variiert wird.

## Revendications

1. Dispositif de commande d'éclairage (1) pour contrôler la sortie de l'intensité de lumière de deux types différents de système d'éclairage (8, 9, 10, 11), comportant:
un dispositif de contrôle (2, 4, 5) pouvant être actionné à l'intérieur d'une plage globale de fonctionnement entre des premier et second points terminaux, pour faire varier des première et seconde sorties électriques en tant que de fonction du point opérationnel,
**caractérisé en ce que** la plage globale est divisée en (i) une première plage au-dessus de laquelle la première sortie électrique varie entre un premier niveau de puissance et un second niveau de puissance, et au-dessus de laquelle la seconde sortie électrique est maintenue sensiblement constante, et (ii) une seconde plage au-dessus de laquelle le niveau de puissance de la première sortie électrique est suffisante pour délivrer de la puissance pour le fonctionnement de système d'éclairage à solide (10, 11) mais insuffisante pour délivrer de la puissance pour autre chose qu'une sortie d'intensité lumineuse négligeable d'un système d'éclairage incandescent (8, 9), et au-dessus de laquelle la seconde sortie électrique varie entre un premier niveau de contrôle et un second niveau de contrôle.

2. Dispositif de commande d'éclairage (1) selon la revendication 1, dans lequel la seconde sortie électrique est prévue en tant que signal de contrôle analogique ou numérique variant entre deux niveaux.

3. Dispositif de commande d'éclairage (1) selon la revendication 2, dans lequel le signal de contrôle est délivré à une sortie sans fil (6) du dispositif de commande d'éclairage (1).

4. Dispositif de commande d'éclairage (1) selon la revendication 2, dans lequel le signal de contrôle est superposé à la première sortie électrique.

5. Dispositif de commande d'éclairage (1) selon l'une quelconque des revendications précédentes, dans lequel le dispositif de contrôle (2, 4, 5) comprend un unique bouton de contrôle (2) pouvant glisser ou pivoter entre les premier et second points terminaux ou une paire de boutons respectivement pour incrémenter et décrémenter à l'intérieur de la plage globale de fonctionnement entre les premier et second points terminaux, le bouton de contrôle (2) ou boutons étant situé(s) éloigné(s) des éléments de contrôle de puissance du dispositif de commande, communiquant avec eux par l'intermédiaire d'une liaison sans fil (6a).

6. Dispositif de commande d'éclairage (1) selon l'une quelconque des revendications précédentes, comportant en outre un second dispositif de contrôle (3, 5) pouvant être actionné au-dessus d'une plage de fonctionnement pour faire varier une seconde caractéristique de contrôle de la seconde sortie électrique.

7. Dispositif de commande d'éclairage comprenant une première unité d'éclairage (8, 9) et une seconde unité d'éclairage (10, 11) de différentes caractéristiques électriques,
**caractérisé en ce que** le système d'éclairage comprend un dispositif de commande d'éclairage (1) selon l'une quelconque des revendications précédentes.

8. Système d'éclairage selon la revendication 7, dans lequel, au-dessus de la première plage du dispositif de commande d'éclairage (1), l'intensité de la première unité d'éclairage (8, 9) varie entre un premier niveau et un second niveau et l'intensité et/ou la caractéristique de couleur de la seconde unité d'éclairage (10, 11) est maintenue sensiblement constante à un troisième niveau, et au-dessus de la seconde plage du dispositif de commande d'éclairage (1), l'intensité de la première unité d'éclairage (8, 9) est négligeable, et l'intensité et/ou la caractéristique de couleur de la seconde unité d'éclairage (10, 11) varie entre un cinquième niveau et un sixième niveau.

9. Système d'éclairage selon la revendication 8, dans lequel le premier niveau est d'intensité sensiblement élevée et le second niveau est d'intensité faible ou coupé.

10. Système d'éclairage selon la revendication 8 ou la revendication 9, dans lequel le quatrième niveau est d'intensité faible ou coupé, le cinquième niveau est sensiblement d'intensité élevée et le sixième niveau est d'intensité faible ou coupé.

11. Système d'éclairage selon la revendication 8 ou la revendication 9, dans lequel le cinquième niveau est sensiblement une lumière blanche et le sixième niveau est une lumière colorée.

12. Système d'éclairage selon l'une quelconque des revendications 7 à 11, dans lequel le dispositif de contrôle (2, 4, 5) communique avec la première unité d'éclairage (8, 9) en utilisant des premier et second câbles de puissance (13, 14) et communique avec la seconde unité d'éclairage (10, 11) en utilisant lesdits premier et second câbles de puissance (13, 14) et un canal de contrôle (6a, 7a, 7b).

13. Système d'éclairage selon la revendication 12, dans lequel le canal de contrôle est une liaison câblée séparée (7a).

14. Système d'éclairage selon la revendication 12, dans lequel le canal de contrôle comprend un courant porteur (7b) sur les premier et/ou second câbles de puissance (13, 14).

15. Système d'éclairage selon la revendication 12, dans lequel le canal de contrôle comprend une liaison sans fil (6a).

16. Système d'éclairage selon l'une quelconque des revendications 7 à 15, dans lequel la première unité d'éclairage est une unité d'éclairage incandescente (8, 9) et la seconde unité d'éclairage est une unité d'éclairage à solide (10, 11).

17. Système d'éclairage selon l'une quelconque des revendications 12 à 16, dans lequel le dispositif de contrôle (2, 4, 5) comprend une sortie de puissance variable contrôlée en phase pour alimenter les première et seconde unités d'éclairage (8, 9, 10, 11) et contrôler l'intensité de la première unité d'éclairage (8, 9).

18. Système d'éclairage selon la revendication 17, dans lequel la seconde unité d'éclairage (10, 11) comprend un décodeur (10a, 11a) pour déterminer l'intensité de la seconde unité d'éclairage selon un signal de contrôle reçu par l'intermédiaire du canal de contrôle (6a, 7a, 7b).

19. Système d'éclairage selon la revendication 17 ou la revendication 18, dans lequel la seconde unité d'éclairage (10, 11) comprend un décodeur (10a, 11a) pour déterminer la caractéristique de couleur de la seconde unité d'éclairage (10, 11) selon le signal de contrôle reçu par l'intermédiaire du canal de contrôle (6a, 7a, 7b).

20. Système d'éclairage selon l'une quelconque des revendications 7 à 19, dans lequel le dispositif de contrôle (2, 4, 5) comprend un bouton de contrôle unique (2) pouvant glisser ou pivoter entre les premier et second points terminaux ou une paire de boutons respectivement pour incrémenter et décrémenter à l'intérieur de la plage globale de fonctionnement entre les premier et second points terminaux, le bouton de contrôle (2) ou les boutons étant situé(s) éloigné(s) des éléments de contrôle de puissance du dispositif de commande, communiquant entre eux par une liaison sans fil.

21. Système d'éclairage selon la revendication 12, comportant en outre un second dispositif de contrôle (3, 5) pouvant être actionné au-dessus d'une plage de fonctionnement pour faire varier une seconde caractéristique de sortie de la seconde unité d'éclairage (10, 11).

22. Système d'éclairage selon la revendication 21, dans lequel la seconde caractéristique est la couleur.

23. Système d'éclairage selon la revendication 21, dans lequel la seconde caractéristique de sortie varie en délivrant un second signal de contrôle, grâce au dispositif de contrôle (2, 4, 5), à la seconde unité d'éclairage (8, 9) par l'intermédiaire du canal de contrôle (6a, 7a, 7b).
